Europäisches Patentamt

European Patent Office

Office européen des brevets

(19)

(11) Veröffentlichungsnummer: **0 326 914**
**B1**

(12) **EUROPÄISCHE PATENTSCHRIFT**

(45) Veröffentlichungstag der Patentschrift:
**05.12.90**

(51) Int. Cl.⁵: **C01B 17/34**

(21) Anmeldenummer: **89101220.5**

(22) Anmeldetag: **25.01.89**

(54) Verfahren zur Herstellung von Natriumpolysulfiden aus den Elementen Natrium und Schwefel.

(30) Priorität: **04.02.88 DE 3803243**

(43) Veröffentlichungstag der Anmeldung:
**09.08.89 Patentblatt 89/32**

(45) Bekanntmachung des Hinweises auf die Patenterteilung:
**05.12.90 Patentblatt 90/49**

(84) Benannte Vertragsstaaten:
**DE FR GB IT**

(56) Entgegenhaltungen:
**EP-A- 0 177 671**
**DE-A- 3 436 698**

(73) Patentinhaber: **Degussa Aktiengesellschaft,
Weissfrauenstrasse 9, D-6000 Frankfurt am Main 1(DE)**

(72) Erfinder: **Bittner, Friedrich, Dr., Mozartstrasse 38,
D-6232 Bad Soden(DE)**
Erfinder: **Hinrichs, Walter, Dr., Alte Bohle 15,
D-5040 Brühl(DE)**
Erfinder: **Hovestadt, Herbert, Dr., Kölner Ring 138,
D-5042 Erftstadt(DE)**
Erfinder: **Lange, Ludwig, Dr., Mühlenbach 40,
D-5040 Brühl(DE)**
Erfinder: **Splett, Erich, Im Bachholz 4,
D-5030 Hürth-Berrenrath(DE)**

## Beschreibung

Die Erfindung betrifft ein Verfahren zur Herstellung von reinen Natriumpolysulfiden direkt aus den Elementen Natrium und Schwefel.

Es ist bekannt, daß die Elemente Natrium und Schwefel äußerst heftig miteinander reagieren (Bildungsenthalpie für $Na_2S_4$: $\Delta H_B$ = -389,1 kJ/Mol, für das krist. $Na_2S_4$: $\Delta H°_{289,16}$ = -412 kJ/Mol), so daß eine Herstellung direkt aus den auf dem Markt in großer Reinheit erhältlichen Elementen erst nach der Lehre der DE-PS 34 36 698 möglich wurde. In dieser Patentschrift ist ein Verfahren zur Herstellung von Natriumpolysulfiden, vorzugsweise Natriumtetrasulfid $Na_2S_4$ und Polysulfid der stöchiometrischen Zusammensetzung $Na_2S_3$, aus den Elementen Natrium und Schwefel in hochreiner, absolut wasser- und lösungsmittelfreier Form beschrieben, das dadurch gekennzeichnet ist, daß man das Natrium und den Schwefel unter Schutzgas in einem dem gewünschten Polysulfid entsprechenden stöchiometrischen Verhältnis abwechselnd in eine vorgelegte Schmelze eines Polysulfids unter kräftigem Rühren in derart bemessenen Portionen eindosiert, daß beim Natriumeintrag selbst bei Bildung solcher niederer Polysulfid-Zwischenprodukte, die in der schmelzflüssigen Vorlage in heterogener Phase vorliegen, die Reaktionsmischung im Zustand einer rührfähigen Suspension verbleibt und daß man beim Eintrag des Schwefels diesen jeweils vollständig zu einem Polysulfid eines höheren Schwefelgehaltes abreagieren läßt.

Welches Polysulfid bei diesem Verfahren gebildet wird, hängt von der jeweiligen Einstellung des stöchiometrischen Verhältnisses bei der alternierenden Chargierung der Reaktionspartner ab. Die äußerst heftige Reaktion der reinen Elemente miteinander wird gemildert, indem z. B. bei einer Darstellung von Natriumtetrasulfid das Natrium nicht direkt mit dem elementaren Schwefel in Kontakt gebracht wird, sondern in kleinen Teilmengen und in dünnem Strahl in eine kräftig gerührte, ca. 300° C heiße Tetrasulfid-Schmelze (Smp. $Na_2S_4$ = 285° C) eingetragen wird, wobei intermediär niedere Polysulfide, z. B. der stöchiometrischen Zusammensetzung bzw. Summenformel $Na_2S_3$ oder $Na_2S_2$ und andere Polysulfide mit jeweils höheren Schmelzpunkten gebildet werden, die durch Nachchargierung der erforderlichen Teilmengen an Schwefel wieder in das gewünschte Polysulfid, also $Na_2S_4$, überführt werden. Bei einer Darstellung anderer Polysulfide, z.B. des Polysulfids der stöchiometrischen Zusammensetzung $Na_2S_3$ oder $Na_2S_5$ wird entsprechend verfahren.

Die alternierende Chargierung der Elemente Natrium und Schwefel in die Polysulfidvorlage gestaltet sich jedoch relativ zeit- und arbeitsaufwendig.

Es konnte nun ein Verfahren entwickelt werden, das diesbezüglich eine wesentliche Verbesserung des bekannten Verfahrens erbringt.

Gegenstand der Erfindung ist ein Verfahren zur Herstellung von reinen wasser- und lösungsmittelfreien Natriumpolysulfiden aus den Elementen Natrium und Schwefel durch Eindosieren des Natriums und des Schwefels unter Schutzgas in einem dem gewünschten Polysulfid entsprechenden stöchiometrischen Verhältnis in die vorgelegte Schmelze eines Polysulfids unter kräftigem Rühren in derartigen Mengen, daß die Reaktionsmischung im Zustand einer rührfähigen Suspension verbleibt und Fortsetzen des Rührens bis zur vollzogenen Bildung des gewünschten Polysulfids.

Das Verfahren wird so durchgeführt, daß man das Natrium und den Schwefel in schmelzflüssiger Form gleichzeitig an örtlich auseinanderliegenden Stellen eines zylindrischen Reaktors, dessen Durchmesser so bemessen ist, daß eine zuverlässige Trennung der Zone der Reaktion zwischen Natrium und Polysulfid von der Zone der Reaktion zwischen Schwefel und Polysulfid gewährleistet ist, zuführt, wobei die Schwefel-Zugabe außerhalb der Zone der Reaktion zwischen Natrium und Polysulfid und in der Rührströmung möglichst weit vor der Zugabestelle für das Natrium erfolgt.

Zur Vermeidung eines direkten Kontaktes zwischen Natrium und Schwefel und damit zur Milderung der Reaktion ist dafür Sorge zu tragen, daß das Natrium und der Schwefel örtlich getrennt der Schmelze zugeführt werden, so daß sich das Natrium nur mit dem vorgelegten Polysulfid, z. B. mit $Na_2S_4$, zu niederen Polysulfiden, wie $Na_2S_3$ und $Na_2S_2$ umsetzt:

(1) $3\ Na_2S_4 + 2\ Na \rightarrow 4\ Na_2S_3$,
(2) $Na_2S_4 + 2\ Na \rightarrow 2\ Na_2S_2$.

Bei der gleichzeitigen örtlich vom Natriumeintrag getrennten Zugabe von Schwefel bildet sich aus der vorgelegten Schmelze intermediär das höhere Polysulfid $Na_2S_5$:

(3) $Na_2S_4 + S \rightarrow Na_2S_5$.

Dieses setzt sich mit dem bei der Natriumchargierung zunächst entstandenen, bei der vorliegenden Reaktortemperatur noch schmelzflüssigen $Na_2S_3$ (Fp = 320° C) um, z. B. zum gewünschten $Na_2S_4$:

(4) $Na_2S_3 + Na_2S_5 \rightarrow 2\ Na_2S_4$.

Das bei der Schmelzetemperatur ebenfalls intermediär entstandene feste, in Grießform in der rührfähigen Polysulfidschmelze vorliegende $Na_2S_2$ (Fp = 445° C) wird in einer Zeitreaktion in max. 1,5 h durch das höhere Polysulfid in das gewünschte Tetrasulfid überführt:

(5) $Na_2S_2 + 2\ Na_2S_5 \rightarrow 3\ Na_2S_4$.

Die notwendige örtliche Trennung der Natriumzugabestelle die wegen der sofortigen heftigen Reaktion zwischen Natrium und der Polysulfidschmelze auf einen engbegrenzten Raum beschränkt ist, von der Zugabestelle für den Schwefel wird zuverlässig gewährleistet, wenn das Natrium und der Schwefel z. B. an weit voneinander liegenden Stellen eines zylindrischen Reaktors als Vollstrahl der Oberfläche der stark gerührten Polysulfidschmelze zugeführt werden.

Eine für die großtechnische Durchführung des erfindungsgemäßen Verfahrens besonders geeignete Ausführungsform sieht vor, daß man in die von einem zentrisch im Reaktor angeordneten Rührorgan erzeugte zirkulierende Strömung das Natrium außerhalb der Thrombe, z. B. auf halber Distanz zwischen Rührerwelle und Reaktorwand, zuführt, während der Schwefel, z. B. auf der gegenüberliegenden Seite mit geringerem Rührerwellenabstand, in die sich ausbildende Thrombe der gerührten Schmelze zugegeben wird. Durch diese Anordnung der Zugabestellen und durch die Rührwirkung wird erreicht, daß sich einerseits der Schwefel unter Bildung höherer Polysulfide mit niederem Schmelzpunkt gemäß (3) in der Gesamtschmelze schnell umsetzt und verteilt, so daß kein elementarer Schwefel in direkten Kontakt mit Natrium kommt. Andererseits kann es an der Natriumzugabestelle zu keiner großen Anreicherung fester niederer Polysulfide kommen. Vielmehr wird es neben dem nach (1) gebildeten, bei der Schmelzetemperatur von max. 330° C noch schmelzflüssigen $Na_2S_3$ gemäß (2) nur zur Ausbildung eines höher schmelzenden Grießes von z. B. $Na_2S_2$ kommen, der jedoch in der Schmelze gut verteilt und wegen seiner großen Oberfläche relativ schnell und quantitativ gemäß (5) umgesetzt wird.

Gleichzeitig werden die bei der stark exothermen Reaktion gemäß (1) und (2) entstehenden großen Wärmemengen in der gesamten Schmelze verteilt und über die von der Schmelze berührte Reaktorwand und über den Boden so abgeführt, daß eine örtliche Überhitzung, die zu einer Schädigung des Reaktor führen würde, ausgeschlossen wird. Zur Verbesserung der Schmelzedurchmischung und damit auch zu einem besseren Wärmetransport über die gekühlte Reaktorwand sind an der Wand senkrechte Strömnungsbrecher angebracht.

Zur Vermeidung lokaler Überhitzungen in der oberhalb des Schmelzespiegels an sich nicht turbulenten Inertgasatmosphäre sorgen unterhalb des Reaktordeckels auf der Rührerwelle angebrachte Ventilatorblätter für eine gute Durchmischung der Atmosphäre und somit ebenfalls für eine bessere Kühlung des Inertgases an der oberen Reaktorwand und am Deckel.

Zum Schutz der Natriumdüse vor Schwefeldämpfen sowie gegen die bei der Reaktion entstehenden Aerosole von niederen Polysulfiden, z. B. $Na_2S_2$, die nach Beendigung der Natriumzugabe mit Natriumresten reagieren und an der Düse feste niedere Polysulfide bilden und damit die Düse verstopfen oder so belegen, daß ein sauberer Vollstrahl des Natriums bei Wiederinbetriebnahme nicht gewährleistet ist, kann die Natriumdüse mit Schutzgas umspült und nach Beendigung der Natriumzufuhr ein gegebenenfalls unterhalb der Düse angebrachter Kugelhahn, dessen Durchlaßquerschnitt ein Vielfaches des Durchmessers des Natriumstrahls beträgt, geschlossen werden.

Nach einer günstigen und bevorzugten Ausführungform des Verfahrens hält man die Temperatur der vorgelegten Schmelze über die Geschwindigkeit des Natriumeintrages und/oder durch Wärmezu- oder -abfuhr oberhalb des Schmelzpunktes der in Frage kommenden Polysulfide, d. h. im Bereich von 200 - 600° C, z. B. bei der Herstellung von $Na_2S_2$ bei 450 - 480° C, bei der Herstellung von $Na_2S_3$ bei 340 - 360° C, bei der $Na_2S_4$-Herstellung bei 300 - 330° C und bei der Herstellung von $Na_2S_5$ bei 230 - 260° C.

Angesichts der aggressiven Polysulfidschmelze und der hohen Reaktionstemperaturen muß für die Umsetzungsapparatur ein geeigneter Werkstoff gewählt werden. Die Reaktion führt man am besten in einem Reaktor durch, dessen mit der Polysulfidschmelze in Berührung kommende Teile aus Aluminium/Magnesium-Legierungen, insbesondere AlMg3 oder aus Glaskohlenstoff oder Keramik, insbesondere $Al_2O_3$ oder $SiO_2$ bestehen oder mit diesen Werkstoffen ummantelt bzw. ausgekleidet sind.

Die Zuführung des Natriums als Vollstrahl auf die Schmelzeoberfläche ist insofern zweckmäßig, weil dadurch zuverlässig verhindert wird, daß Natriumtröpfchen auf die z. B. mit AlMg3 sprengplattierte Reaktorwand oder auf die ummantelte Rührerwelle treffen, was zu Schäden an der Verkleidung führen kann. Zur Vermeidung von Schäden durch die bei der Reaktion mit Natrium auftretenden bis ca. 1000° C heißen Schmelzespritzer sollte die Reaktionszone möglichst weit entfernt sowohl von der Wand als auch von der Rührerwelle liegen. Bei der bevorzugten Ausführungsform des Reaktors trifft daher der Natriumstrahl auf die Schmelzeoberfläche etwa in halber Distanz zwischen Rührerwelle und Reaktorwand.

Als Schutzgas kann ein Inertgas, vorzugweise Argon, eingesetzt werden.

Zum Schutz der Düsen, vornehmlich der Natriumdüse, gegen Schmelzespritzer, die beim Auftreffen auf der kälteren Düsenoberfläche schnell erstarren und somit den notwendigen freien Abriß des Natriumstrahls behindern - wodurch der Strahl z. B. gegen die Reaktorwand abgelenkt werden kann - oder gar die Düsenöffnung verschließen, sind sowohl die Natrium- als auch die Schwefel-Düse zur Erzielung eines größtmöglichen Abstandes von den jeweiligen Raktionszonen in jeweils einem Dom untergebracht, die auf dem Reaktordeckel aufgesetzt sind

Das vorgestellte Verfahren der gleichzeitigen Chargierung von Natrium und Schwefel zeigt gegenüber dem bekannten Verfahren der alternativen Zugabe der Reaktanden zur Schmelze zwei wesentliche Vorteile, einmal den der Zeitersparnis, da bei gleicher Reaktorgröße der Durchsatz mindestens doppelt so groß ist und zum anderen ist bei konstanter Natriumzugabe eine gleichmäßige Wärmeabfuhr und damit eine gleichmäßige Schmelzetemperatur während des gesamten Produktionsablaufs gewährleistet.

Die Erfindung wird nachfolgend anhand der Beschreibung einer konkreten Ausführungsform von Verfahrensweise und Apparatur, welche gleichermaßen für die Herstellung von $Na_2S_4$ und von Polysulfiden einer beliebigen stöchiometrischen Zusammensetzung im Bereich zwischen $Na_2S_3$ bis $Na_2S_5$ geeignet ist, sowie durch Ausführungsbeispiele zu der durchgeführten Bildung der Verbindungen $Na_2S_4$ und $Na_2S_3$ und einem Beispiel zur Umstellung der Produktion von z. B. $Na_2S_4$ auf ein höheres Polysulfid der stöchiometrischen Zusammensetzung $Na_2S_5$ näher erläutert.

Der aufrechtstehende zylindrische Stahlreaktor mit ebenem, zur besseren Totalentleerung um 3° leicht geneigtem Boden hat einen Durchmesser von 1800 mm und eine Höhe von 2800 mm. Die Unterseite des aufgeflanschten ebenen Deckels sowie die Innenseite des Reaktors sind mit Schmelze-resistentem AlMg3 sprengplattiert.

Durch den Reaktordeckel ist zentrisch ein zweistufiges Rührwerk eingelassen und aufgeflanscht, die beiden Dome zur Aufnahme der Natrium- und der Schwefel-Düse sind in einer Achse diesseits und jenseits der Rührerwelle auf dem Deckel aufgeschweißt, und zwar der Natriumdom auf halbem Radius, der Schwefeldom auf ein Viertel Radius von der zentrischen Rührerwelle aus gemessen.

In möglichst großem Abstand von der Natriumdosierung besitzt der Deckel weitere Stutzen zur Aufnahme von Fühlern zur Messung der Schmelze- und der Dampfraumtemperatur, der Füllstandsmeßvorrichtung, der Inertgaszuführung, des durch eine Klappe verschließbaren Kamins zur Abführung des Inertgases, des absenkbaren Rohres zur Fertigproduktentnahme und zur Einführung einer Probenahme-Vorrichtung. Sämtliche produktberührten Einbauteile bestehen entweder aus AlMg3 oder aus AlMg3-ummanteltem Stahl.

Der Stahlreaktor ist an der Außenseite und am Boden mit aufgeschweißten Rohren versehen, die von Wärmeträgeröl durchflossen werden. Ein Heiz-Kühl-Aggregat sorgt für eine möglichst konstante gewünschte Schmelzetemperatur entweder durch Kühlen des nach außen hin isolierten Reaktors während der Reaktionszeit oder durch Heizen während der Entleerungs- und Ruhezeiten.

Die wärmeisolierten Vorlagebehälter aus Edelstahl zur Aufnahme von Natrium und Schwefel sind dagegen ebenso wie die Rohrleitungen elektrisch beheizt, die Temperatur läßt sich regeln und ist z. B. auf konstant 130° C eingestellt.

Die auf Druckmeßdosen stehenden Vorlagebehälter sind so bemessen, daß die jeweils benötigten Natrium- und Schwefel-Mengen je Produktionsansatz vorgehalten werden können. Durch Vorgabe eines bestimmten Argon-Drucks auf die Behälter, z. B. von 0,35 bar auf den Natriumbehälter, kann das Natrium über ein Regelventil gesteuert durch die Düse in den Reaktor eingebracht werden. Um eventuelle Verunreinigungen im Natrium, die ein einwandfreies Passieren der Natriumdüse verhindern würden, zu entfernen, wird das Natrium vor der Düse durch ein feinmaschiges Stahlsieb gefiltert. Bei dem vorgegebenen Druck und beim Einsatz einer Düse mit 3,35 mm Durchmesser können z. B. 180 kg/h Natrium zur Reaktion gebracht werden. Die dem Reaktor zugeführte Natriummenge kann über eine Gewichtsabnahme des auf Druckmeßdosen ruhenden Natriumvorlage-Behälters exakt abgelesen und registriert werden.

Analog zur Natriumdosierung wird bei der gleichzeitig erfolgenden Schwefeldosierung verfahren. Bei einem vorgegebenen Argondruck von 1 bar werden, gesteuert durch ein Regelventil, über eine 4,2 mm Düse z.B. 420 kg/h Schwefel in den Reaktor eingebracht. Während der gesamten Reaktionszeit wird ein leicht erwärmter Argonstrom von 100 l/h ringförmig um die Natriumdüse in den Reaktor ein- und über den geöffneten Kamin abgeführt. Zur Abschirmung des Reaktorinhalts von der Außenatmosphäre wird der Abgasstrom nach Passieren einer Entstaubungsanlage über einen Tauchtopf geleitet, der mit einer inerten Flüssigkeit, z. B. Weißöl, gefüllt ist.

Vor Beginn der chargenweisen Produktion ist der Reaktor mit etwa 5,5 t Polysulfidschmelze als Rest der vorherigen Charge gefüllt, deren Temperatur ca. 20° C oberhalb der Schmelzetemperatur des jeweiligen Polysulfids liegt, bei der Produktion von z. B. $Na_2S_4$ beträgt die Schmelzetemperatur ca. 300° C. Diese Schmelzemenge hat sich als vorteilhaft erwiesen, da damit die Reaktorwärme über die Reaktorwand effizient abgeführt werden kann.

Etwa 10 Minuten vor Beginn der Produktion wird die Wärmetauscheranlage auf Kühlung gestellt. Bei einer Kühlmitteltemperatur von z. B. 190° C wird bei der oben angegebenen Dosiergeschwindigkeit von Natrium und Schwefel die Reaktortemperatur von 330° C nicht überschritten. Innerhalb von 7 Stunden lassen sich so z. B. 4 t $Na_2S_4$ herstellen, so daß der Reaktor nach Beendigung der Produktion mit insgesamt 9,5 t Schmelze gefüllt ist. Es hat sich als sinnvoll erwiesen, etwa 30 Minuten vor Ende der Natriumchargierung die Wärmeträgeranlage wieder auf "heizen" zu stellen, um sie durch Ausnutzen der Reaktionswärme während der letzten Phase zum Erwärmen des Wärmeträgeröls von 190° C auf ca. 300° C zu unterstützen.

Während der Produktion und während oder 1 1/2-stündigen Nachreaktionszeit zum Lösen und zum Umsetzen der primär entstandenen grießförmig anfallenden niederen Polysulfide, wie z. B. $Na_2S_2$, läuft das Rührwerk mit einer Geschwindigkeit von 180 Umdrehungen/min. Wenn die Schmelze homogen ist, kann das Rührwerk bis unmittelbar vor der nächsten Produktionsphase abgestellt bleiben.

Durch Einführen eines kalten Probenahmestabes aus AlMg3 durch den mit einem Kugelhahn verschließbaren Probenahmestutzen und durch kurzes Eintauchen des Stabes in die Schmelze läßt sich genügend anhaftendes und nach dem Herausziehen des Stabes aus der Schmelze erstarrendes Material aus dem Reaktor für eine Analyse entnehmen. Der Kugelhahn ist so dimensioniert, daß er durch ein jeweils einzuhängendes Schutzrohr nicht von der an dem Probenahmestab anhaftenden Schmelze verschmutzt werden kann. Der Spülargonstrom in den Reaktor von 100 l/h verhindert, daß während der Probenahme Luft in den Reaktor gelangt. Die chemischen Analysen des Reaktorinhalts haben gezeigt, daß nur in sehr seltenen Fällen ein Nachchargieren von Natrium oder Schwefel erforderlich ist.

Zur Teilentleerung des Reaktors wird der Abluftkamin geschlossen und auf den Reaktor ein Argondruck von 0,5 bar gegeben. Nach Öffnen des Keramikventils im Produktentnahmerohr aus AlMg3 wird das schmelzflüssige Polysulfid in eine an sich bekannte Pelletisierungsapparatur überführt. Das bis auf ca. 100 mm Bodenabstand im Reaktor abgesenkte Entnahmerohr ist außerhalb des Reaktors, ebenso wie alle von der Schmelze berührten Teile der Pelletisierungsapparatur, die ebenfalls aus AlMg3 bestehen, auf Temperaturen oberhalb der Schmelzetemperatur des jeweiligen Polysulfids elektrisch beheizt, bei der Herstellung von $Na_2S_4$ z. B. auf 330° C. Die Pelletisierungsapparatur selbst ist so konstruiert, daß sowohl die Schmelze als auch die gebildeten Pellets unter Inertgas stehen. Die hygroskopischen Polysulfide werden unter Stickstoff luftdicht verpackt.

Die Pelletisierungsapparatur und die Verpackungsanlage sind so bemessen, daß die je Charge produzierte Menge von 4 t Polysulfid in 6 - 7 h pelletisiert und verpackt werden kann, so daß nach Entspannen des Reaktors über den Kamin und nach dem Schließen des Keramikventils zur Pelletisierungsapparatur der mit 5,5 t Restschmelze gefüllte Reaktor für die Produktion der nächsten Charge bereitsteht.

| Beispiel 1: | Herstellung von Dinatriumtetrasulfid $Na_2S_4$ | |
|---|---|---|
| Vorlage (Rest aus Vorcharge) | | = 5,515 t $Na_2S_4$ |
| Natriumzugabe | | = 1,056 t Na |
| Schwefelzugabe | | = 2,944 t S |
| Produktion | | = 4,000 t $Na_2S_4$ |
| Produktentnahme | | = 4,035 1 $Na_2S_4$ *) |
| Rest (Vorlage für nächste Charge) | | = 5,480 t $Na_2S_4$ |
| *) Analyse:<br>26,45% Na (theortisch 26,39% Na)<br>73,60% S ges. (theoretisch 73,61% S ges.) | | |

| Beispiel 2: | Herstellung von Dinatriumtrisulfid $Na_2S_3$ | |
|---|---|---|
| Vorlage (Rest aus Vorcharge) | | = 5,495 t $Na_2S_3$ |
| Natriumzugabe | | = 1,294 t Na |
| Schwefelzugabe | | = 2,706 t S |
| Produktion | | = 4,000 t $Na_2S_3$ |
| Produktentnahme | | = 3,980 1 $Na_2S_3$ *) |
| Rest (Vorlage für nächste Charge) | | = 5,515 t $Na_2S_3$ |
| *) Analyse:<br>32,17% Na (theortisch 32,34% Na)<br>67,80% S ges. (theoretisch 67,66% S ges.) | | |

| Beispiel 3: | Umstellung der Produktion von Dinatriumtetrasulfid Na$_2$S$_4$ auf Dinatriumpentasulfid Na$_2$S$_5$ | |
|---|---|---|
| Vorlage (Rest aus Vorcharge) | | = 5,470 t Na$_2$S$_4$ |
| Natriumzugabe | | = 0,674 t Na |
| Schwefelzugabe | | = 3,356 t S |
| Produktion | | = 4,030 t Na$_2$S$_5$ |
| Produktentnahme | | = 4,005 1 Na$_2$S$_5$ *) |
| Rest (Vorlage für nächste Charge) | | = 5,495 t Na$_2$S$_5$ |

*) Analyse:
22,24% Na (theortisch 22,29% Na)
77,79% S ges. (theoretisch 77,71% S ges.)

## Patentansprüche

1. Verfahren zur Herstellung von Natriumpolysulfiden aus den Elementen Natrium und Schwefel durch Eindosieren des Natriums und des Schwefels unter Schutzgas in einem dem gewünschten Polysulfid entsprechenden stöchiometrischen Verhältnis in eine vorgelegte Schmelze eines Polysulfids unter kräftigem Rühren in derartigen Mengen, daß die Reaktionsmischung im Zustand einer rührfähigen Suspension verbleibt und Fortsetzen des Rührens bis zur vollzogenen Bildung des gewünschten Polysulfids, wobei man das Natrium und den Schwefel in schmelzflüssiger Form gleichzeitig an örtlich auseinanderliegenden Stellen eines zylindrischen Reaktors, dessen Durchmesser so bemessen ist, daß eine zuverlässige Trennung der Zone der Reaktion zwischen Natrium und Polysulfid von der Zone der Reaktion zwischen Schwefel und Polysulfid gewährleistet ist, zuführt, wobei die Schwefel-Zugabe außerhalb der Zone der Reaktion zwischen Natrium und Polysulfid und in der Rührströmung möglichst weit vor der Zugabestelle für das Natrium erfolgt.

2. Verfahren nach Anspruch 1, **dadurch gekennzeichnet**, daß man in die von einem zentrisch im Reaktor angeordneten Rührorgan erzeugte zirkulierende Strömung das Natrium außerhalb der Thrombe und den Schwefel in die Thrombe jeweils als aus einer Düse austretenden Vollstrahl der vorgelegten Polysulfidschmelze zuführt.

3. Verfahren nach Anspruch 2, **dadurch gekennzeichnet**, daß man die Natriumdüse gegebenenfalls zum Schutz vor Schwefeldämpfen mit dem Schutzgas umspült und einen gegebenenfalls unterhalb der Düse angebrachten Kugelhahn, dessen Durchlaßquerschnitt ein Vielfaches des Durchmessers des Natriumvollstrahls beträgt, nach Beendigung der Natriumzufuhr schließt.

4. Verfahren nach den Ansprüchen 1 bis 3, **dadurch gekennzeichnet**, daß man die Temperatur der vorgelegten Schmelze über die Geschwindigkeit des Natriumeintrages und/oder durch Wärmezu- oder -abfuhr im Bereich von 200 -600° C hält.

5. Verfahren nach den Ansprüchen 1 bis 4, **dadurch gekennzeichnet**, daß bei der Herstellung von Na$_2$S$_2$ die Temperatur der Schmelze 450 -480° C, von Na$_2$S$_3$ die Temperatur der Schmelze 340 - 360° C, bei der Na$_2$S$_4$-Herstellung 300 - 330° C und bei der Herstellung von Na$_2$S$_5$ die Temperatur 230 - 260° C beträgt.

6. Verfahren nach den Ansprüchen 1 bis 5, **dadurch gekennzeichnet**, daß man die Reaktion in einem Reaktor durchführt, dessen mit der Polysulfidschmelze in Berührung kommende Teile aus Aluminium/Magnesium-Legierungen, insbesondere AlMg3 oder aus Glaskohlenstoff oder Keramik, insbesondere aus Al$_2$O$_3$ oder SiO$_2$ bestehen oder mit diesen Werkstoffen ummantelt bzw. ausgekleidet sind.

7. Verfahren nach den Ansprüchen 1 bis 6, **dadurch gekennzeichnet**, daß man als Schutzgas ein Inertgas, vorzugsweise Argon, einsetzt.

## Revendications

1. Procédé pour la préparation de polysulfures de sodium à partir des éléments sodium et soufre, par introduction de façon réglée du sodium et du soufre, sous un gaz protecteur, en une proportion stoechiométrique correspondant au polysulfure désiré, dans une masse fondue d'un polysulfure sous vigoureuse agitation, en quantités telles que le mélange réactionnel se maintient à l'état d'une suspension pouvant être agitée, et poursuite de l'agitation jusqu'à formation complète du polysulfure recherché, caractérisé en ce que l'on envoie le sodium et le soufre à l'état fondu, simultanément en des points localement séparés d'un réacteur cylindrique dont le diamètre est choisi de manière à garantir une séparation certaine de la zone de la réaction entre sodium et polysulfure d'avec la zone de la réaction entre soufre et polysulfure, l'addition de soufre s'effectuant à l'extérieur de la zone de la réaction entre sodium et polysulfure et le plus loin possible, dans le courant d'agitation, du point d'addition du sodium.

2. Procédé selon la revendication 1, caractérisé en ce que l'on envoie dans la masse fondue de polysulfure disposée au préalable, dans le courant circulant engendré par un organe d'agitation disposé au centre dans le réacteur, le sodium à l'extérieur de la trombe et le soufre dans la trombe, chacun sous forme de jet continu sortant d'un injecteur.

3. Procédé selon la revendication 2, caractérisé en ce que l'on enveloppe éventuellement avec le gaz protecteur l'injecteur de sodium pour la protection contre des vapeurs de soufre, et une fois terminé l'apport de soufre, on ferme un robinet à boisseau sphérique éventuellement placé au-dessous de l'injecteur, robinet dont la section de passage représente plusieurs fois le diamètre du jet continu de sodium.

4. Procédé selon l'une quelconque des revendications 1 à 3, caractérisé en ce que l'on maintient dans la plage de 200 à 600°C la température de la masse fondue disposée au préalable, au moyen de la cadence d'introduction de sodium et/ou par apport ou élimination de chaleur.

5. Procédé selon l'une quelconque des revendications 1 à 4, caractérisé en ce que, dans la préparation de $Na_2S_2$, la température de la masse fondue est de 450–480°C, de $Na_2S_3$, la température de la masse fondue est de 340–360°C, dans la préparation de $Na_2S_4$, elle est de 300–330°C et dans la préparation de $Na_2S_5$, la température est de 230–260°C.

6. Procédé selon l'une quelconque des revendications 1 à 5, caractérisé en ce que l'on effectue la réaction dans un réacteur, dont les parties entrant en contact avec la masse fondue de polysulfure sont en aluminium/alliages d'aluminium, en particulier en $AlMg_3$ ou en carbone vitreux ou en céramique, en particulier en $Al_2O_3$ ou $SiO_2$, ou sont entourées ou revêtues avec ces matériaux.

7. Procédé selon l'une quelconque des revendications 1 à 6, caractérisé en ce que l'on utilise en tant que gaz protecteur un gaz inerte, de préférence l'argon.

**Claims**

1. A process for the production of sodium polysulfides from the elements sodium and sulfur by introduction of the sodium and the sulfur in an inert gas atmosphere in a stoichiometric ratio corresponding to the desired polysulfide and with vigorous stirring into a melt of a polysulfide in such quantities that the reaction mixture remains in the state of a stirrable suspension and continuation of stirring until formation of the desired polysulfide is complete, the sodium and the sulfur being simultaneously introduced in molten form at locally separate points of a cylindrical reactor of which the diameter is such that reliable separation of the zone of the reaction between sodium and polysulfide from the zone of the reaction between sulfur and polysulfide is guaranteed, the sulfur being added outside the zone of the reaction between sodium and polysulfide and as far as possible – in the stirred flow – from the point at which the sodium is added.

2. A process as claimed in claim 1, characterized in that the sodium is introduced into the circulating flow produced by a stirring element arranged centrally in the reactor outside the thrombus while the sulfur is introduced into the thrombus, the sodium and the sulfur each being fed to the polysulfide melt in the form of a full jet issuing from a nozzle.

3. A process as claimed in claim 2, characterized in that the protective gas circulates around the sodium nozzle, optionally for protection against sulfur vapours, and a ball cock optionally arranged beneath the nozzle, of which the throughflow cross-section is several times the diameter of the full sodium jet, is closed after introduction of the sodium.

4. A process as claimed in claims 1 to 3, characterized in that the temperature of the melt is kept in the range from 200 to 600°C through the rate of introduction of the sodium and/or by the application or dissipation of heat.

5. A process as claimed in claims 1 to 4, characterized in that the temperature of the melt is in the range from 450 to 480°C in the production of the $Na_2S_2$, in the range from 340 to 360°C in the production of $Na_2S_3$ in the range from 300–330°C in the production of $Na_2S_4$ and in the range from 230 to 260°C in the production of $Na_2S_5$.

6. A process for the production of claims 1 to 5, characterized in that the reaction is carried out in a reactor of which the parts coming into contact with the polysulfide melt consist of or are lined or clad with aluminium/magnesium alloys, more particularly $AlMg_3$, or glass carbon or ceramics, more particularly $Al_2O_3$ or $SiO_2$.

7. A process as claimed in claims 1 to 6, characterized in that the inert gas is preferably argon.